# EUROPÄISCHE PATENTANMELDUNG

(11) **EP 1 322 023 A1**
(43) Veröffentlichungstag der Anmeldung: **25.06.2003**
(21) Anmeldenummer: 02015888.7
(22) Anmeldetag: 17.07.2002
(51) Int. Cl.: H02K 1/27, H02K 5/16, H02K 15/03

(54) **Permanentmagnetrotor**

(30) Priorität: 25.10.2001 DE 10152151
(71) Anmelder: Bühler Motor GmbH, 90459 Nürnberg (DE)
(72) Erfinder: Bernreuther, Georg, 90449 Nürnberg (DE); Stadler, Anton, 91161 Hilpoltstein (DE)

(57) **Zusammenfassung**

Die Erfindung betrifft einen Permanentmagnetrotor für einen Elektromotor, bestehend aus einem Permanentmagnetring, der von einem Kunststofftragteil gehalten ist und einem Gleitlager. Aufgabe der vorliegenden Erfindung ist es bei einem derartigen Permanentmagnetrotor eine zuverlässige, einfache und wirtschaftliche Verbindung zwischen dem Permanentmagnetring und dem Kunststofftragteil herzustellen, insbesondere, wenn ein sehr dünnwandiger Permanentmagnetring verwendet wird, ohne dass es zu Magnetbrüchen kommt und dass eine lange Lebensdauer gewährleistet ist sowie eine kostengünstige Lagerung, die einen niedrigen Geräuschpegel ermöglicht. Diese Aufgabe wird dadurch gelöst, dass der Permanentmagnetring aus einem gepressten kunststoffgebundenen Seltenerdmagneten besteht, das Gleitlager mitlaufend ist und aus einem Sintermaterial besteht, das Kunststofftragteil in einem Spritzwerkzeug herstellbar ist, eine zylindrische Aufnahme für ein mitlaufendes Gleitlager aufweist und einstückig mit einem Ritzel ist, das Kunststofftragteil den Permanentmagnetring zumindest teilweise axial und radial umfasst und der Permanentmagnetring als Einlegeteil im Spritzwerkzeug mit einspritzbar ist.

## Beschreibung

Die Erfindung betrifft einen Permanentmagnetrotor für einen Elektromotor, bestehend aus einem Permanentmagnetring, der von einem Kunststofftragteil gehalten ist und einem Gleitlager.

Aus der DE-OS 199 09 227 A1 ist ein derartiger Permanentmagnetrotor bekannt. Bei diesem ist ein Rückschlussring mit dem Permanentmagneten verklebt. Eine derartige Klebung hält nur in einem begrenzten Temperaturbereich zuverlässig. Bei höheren Temperaturen kann der Kleber seine Haftkraft verlieren. Weiter ergeben sich Spannungen aufgrund unterschiedlicher Temperaturausdehnungskoeffizienten. Dadurch kann es zum Reißen der Klebestelle oder des Kunststofftragteiles kommen. Zudem ist ein Klebeprozess nicht kostengünstig und die Dosierung nur sehr schwierig prozesssicher zu beherrschen.

Aus der EP 0 215 460 A2 ist ein Permanentmagnetrotor bekannt, bei dem Spannungen aufgrund unterschiedlicher Wärmeausdehnungskoeffizienten durch Aussparungen in der Nabe des Kunststofftragteils ausgeglichen werden.

Aus der DE 89 00 892 U1 ist ein Permanentmagnetrotor als durchbruchsfreier keramischer Rotorzylinder mit stirnseitigen, Wellenteile umfassende Kunststoffanspritzungen bekannt, wobei der Permanentmagnet mit Vertiefungen versehen ist, in die die Kunststoffanspritzungen eingreifen.

Die DE 198 38 661 A1 beschreibt einen Permanentmagnetrotor mit Magnetsegmenten, wobei die Magnete vor dem Umspritzen auf einen geblechten weichmagnetischen Rotorkern geklebt werden.

Aufgabe der vorliegenden Erfindung ist es, bei einem Permanentmagnetrotor der eingangs genannten Gattung eine zuverlässige, einfache und wirtschaftliche Verbindung zwischen dem Permanentmagnetring und dem Kunststofftragteil herzustellen, ohne dass es zu Magnetbrüchen kommt und dass eine lange Lebensdauer und gute Anlaufeigenschaften gewährleistet sind. Ausserdem soll eine einfach herzustellende Lagerung des Rotors sichergestellt werden, die eine einfache Montage des Rotors in das Gehäuse des Elektromotors ermöglicht und ein niedriges Laufgeräusch gewährleistet.

Diese Aufgabe wird dadurch gelöst, dass der Permanentmagnetring aus einem gepressten kunststoffgebundenen Seltenerdmagneten besteht, das Gleitlager mitlaufend ist und aus einem Sintermaterial besteht, das Kunststofftragteil in einem Spritzwerkzeug herstellbar ist, eine zylindrische Aufnahme für ein mitlaufendes Gleitlager aufweist und einstückig mit einem Ritzel ist, das Kunststofftragteil den Permanentmagnetring zumindest teilweise axial und radial umfasst und der Permanentmagnetring als Einlegeteil im Spritzwerkzeug mit einspritzbar ist. Durch Verwendung eines gepressten kunststoffgebundenen Seltenerdmagneten ist ein sehr dünner und daher trägheitsarmer Rotoraufbau möglich. Das Gleitlager aus Sintermaterial erhöht die Lebensdauer und verringert das Laufgeräusch. Durch die axiale und radiale Umfassung des Permanentmagnetrings ist dieser dauerhaft sicher gehalten. Die Einstückigkeit von Kunststofftragteil und Ritzel und die Einlegbarkeit des Permanentmagnetrings in ein Spritzwerkzeug ermöglicht eine besonders wirtschaftliche Herstellung des Permanentmagnetrotors.

Weiterbildungen der Erfindung werden in den Unteransprüchen dargestellt:
Eine noch bessere Halterung des Permanentmagnetrings wird durch beidseitige axiale Halterung im Kunststofftragteil erreicht.

Das Ritzel ist bevorzugt Bestandteil einer als Hohlwelle ausgebildeten Rotorwelle. Der Permanentmagnetrotor lässt sich hierbei einfach auf einer stabilen Achse lagern wodurch das Ritzel abstützbar ist.

Zusätzlich zum Magnetring kann auch ein weichmagnetischer Rückschlussring auf den Innenumfang des Permanentmagnetrings angebracht werden. Dieser hat die Funktion, den magnetischen Rückfluss zu bündeln und Magnetmaterial zu sparen. Bei Verwendung eines weichmagnetisches Sintermaterials als Rückschlussring, ist die Herstellung günstig.

Um Relativverdrehungen zwischen dem Kunststofftragteil und dem Rücklschlussring und/oder dem Permanentmagnetring zu verhindern, ist der Rückschlussring und/oder der Permanentmagnetring mit Aussparungen versehen, die eine formschlüssige Verbindung mit dem Kunststofftragring eingehen. Dabei sind die Aussparungen bevorzugt stirnseitig angeordnet.

Für eine definiertere Auflage des Gleitlagers, kann dieses im Innenbereich aufgeweitet werden.

Eine besonders Vorteilhafte Weiterbildung des Permanentmagnetrotors ist mit einer zusätzlichen mit dem Kunststofftragteil einstückigen Lagerstelle gegeben. Diese Lagerstelle kann beispielsweise zylindrisch oder konisch ausgebildet sein und stützt im Bereich des Ritzels Getriebekräfte ab. Durch das zusätzliche Lager erhält man zwei weit auseinander liegende Lagerstellen, wobei eines aus Kunststoff besteht und das andere durch das montierte Gleitlager gebildet wird - dadurch ist der Permanentmagnetrotor besser geführt und es entstehen deutlich weniger Geräusche.

Zur Verlängerung der Lebensdauer dient ein Schmierstoffdepot, das das Gleitlager mit Schmierstoff versorgt.

Der Permanentmagnetrotor ist für ein besseres Anlaufverhalten und für eine Spritzgusstechnische Herstellungsweise entsprechend materialsparend ausgebildet. Hierfür sind zwischen dem Lager und dem Permanentmagnetring bzw. dem Rückschlussring neun Speichen vorgesehen.

Die Herstellung des Kunststofftragrings erfolgt in einer Spritzmaschine. In die Spritzmaschine wird der Permanentmagnetring und gegebenenfalls auch der Rückschlussring in die Spritzmaschine eingelegt, wobei der Permanentmagnetring vorher über den Rückschlussring geschoben wird.

Da der Permanentmagnetring sehr brüchig ist, ist es sehr wichtig, dass dieser während des Spritzvorgangs direkt an Formteilen des Spritzwerkzeugs anliegt. Dadurch ist der Permanentmagnetring während des Spritzvorgangs gut abgestützt und hält auch dem Spritzdruck stand.

Es ist sehr wichtig, dass kein oder nur sehr wenig Kunststoffmaterial zwischen dem Rückschlussring und demPermanentgmagnetring eindringen kann um Magnetbrüche und Asymmetrien zu vehindem. Dies lässt sich dadurch erreichen, dass Abstandhalter vorgesehen sind, die den Permanentmagnetring und/oder den koaxial zu diesem angeordneten weichmagnetischen Rückschlussring am Spritzwerkzeug axial halten und dass Zentrierelemente vorgesehen sind, die den Permanentmagnetring und/oder den weichmagnetischen Rückschlussring an seiner Innenwandung radial halten. Durch die Abstandhalter und Zentriermittel ist also eine genaue Zuordnung zwischen dem Permanentmagnetring und dem Rückschlussring gegeben. Die Zentrierelemente können in Form von Zylinderstiften oder Ringsegmenten ausgebildet sein. Vorzugsweise sind drei Zentrierelemente vorgesehen.

Die Erfindung umfasst auch einen Stellantrieb mit einem erfindungsgemäßen Permanentmagnetrotor. Dieses weist ein Gehäuse auf, wobei in einem Gehäuseteil das Schmierstoffdepot für das Lager des Permanentmagnetrotors angeomdet ist, in dem der Permanentmganetrotor gelagert ist. Das Schmierstoffdepot ist in Form einer ringförmigen Nut ausgebildet, in das eine ringförmige Anformung des Permanentmagnetrotors ragt und somit Schmierstoff aufnehmen und an das Lager weiterleiten kann. Diese Anformung ist zur einfacheren Herstellung einstückig mit dem Kunststofftragteil.

Eine besonders leichtgängige und robuste Lagerung wird durch die Aufnahme des Permanentmagnetrotors auf eine im Gehäuse eingebaute und feststehende Achse erreicht. Diese Achse ist insbesondere als Metallachse ausgebildet um die sich beide Lager des Permanentmganetrotors drehen. Die Achse kann aus gehärtetem Stahl bestehen, wobei auch eine Oberflächenhärtung bei weichem Kern sinnvoll ist - dies verringert die Geräuschübertragung. Aus dem gleichen Grund kann die Oberfläche der Achse auch vernickelt sein.

Der Permanentmagnetrotor weist eine Welle zwischen dem magnetischen Bereich und dem Ritzel auf, wodurch der Permanentmagnetring in einer Motorkammer angeordnet sein kann und das Ritzel in einer Getriebekammer, wobei beide Kammern durch eine Zwischenplatte mit Achsdurchgang voneinander getrennt sind. In der Motorkammer sind zwei Statorteile auf der Zwischenplatte befestigt und radial um den Rotor angeordnet. Das Ritzel ist mit einem Untersetzungsgetriebe in der Getriebekammer in Eingriff. Der Schmierstoff ist bei dieser Anordnung in der Motorkammer deponiert.

Nachstehend wird die Erfindung anhand eines Ausführungsbeispiels und Varianten dazu näher erläutert.

Es zeigen:
- Fig. 1a: einen Permanentmagnetrotor im Schnitt,
- Fig. 1b: einen Permanentmagnetrotor mit einem Rückschlussring im Schnitt,
- Fig. 1c: einen Permanentmagnetrotor mit einem zweiten zylindrischen Lager im Schnitt,
- Fig. 1d: einen Permanentmagnetrotor mit einem zweiten konisch angeordneten Lager im Schnitt,
- Fig. 2: eine dreidimensionale Darstellung eines Permanentmagnetrings (Maßstab weicht ab von den übrigen Figuren) und
- Fig. 3: eine Explosionsdarstellung eines Stellantriebs mit dem Permanentmagnetrotor.

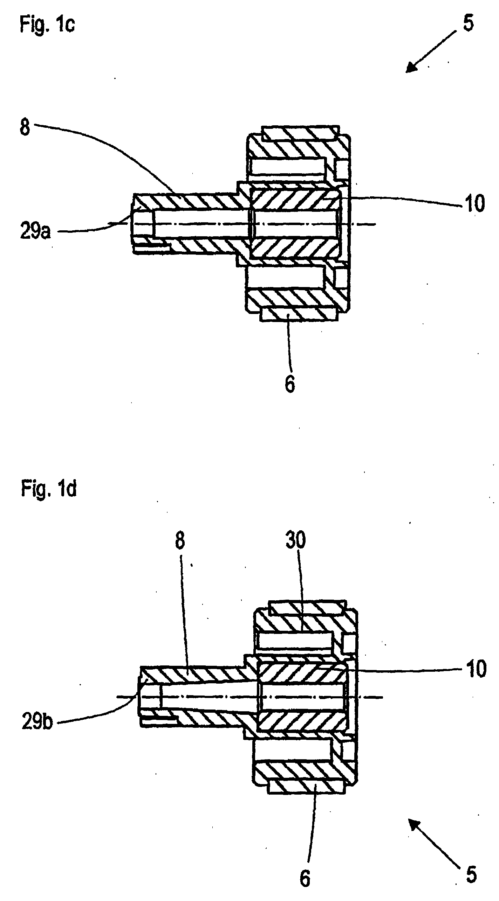

Fig. 1a zeigt einen Permanentmagnetrotor 5, mit einem Kunststofftragteil 8 und einem Permanentmagnetring 6. Das Kunststofftragteil 8 besitzt eine Aufnahme 26 für ein zu montierendes Lager, eine Rotorwelle 11, die als Hohlwelle ausgebildet ist, an deren Ende ein Ritzel 9 angeformt ist. Das Ritzel 9 ist axial zum Permanentmagnetring 6 versetzt, so dass eine Trennung des Getriebebereichs vom Motorbereich möglich ist. Der Permanentmagnetring 6 wird stimseitig teilweise vom Kunststofftragteil 8 umfasst. Radial liegt der Permanentmagnetring 6 einerseits frei, wodurch der Luftspalt sehr gering gehalten werden kann, andererseits liegt der Permanentmagnetring 6 am Kunststofftragteil 8 an. Die Aufnahme 26 ist so bemessen, dass ein Gleitlager 10, insbesondere ein Sintergleitlager darin Platz hat. Das Gleitlager 10 ist mit dem Rotor 5 mitlaufend ausgeführt, es läuft auf einer feststehenden Achse und ist mit Schmierstoff getränkt.

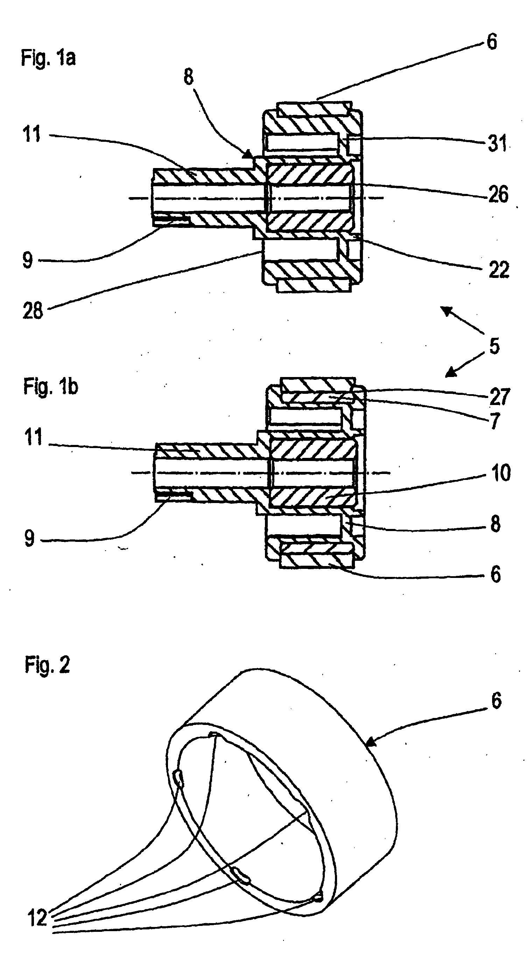

Fig. 1b zeigt einen Permanentmagnetrotor 5, der zusätzlich zur Darstellung in Fig. 1a einen Rückschlussring 7 aufweist. Mit dem Kunststofftragteil 8 ist eine ringförmige Anformung 22 einstückig, die dazu dient Schmierstoff aufzunehmen, das in einem ringförmigen Schmierstoffdepot in einem Motorgehäuseteil eingebracht ist. Dadurch ist eine hohe Lebensdauer möglich, so dass der Rotor auch in langlebigen bürstenlosen Motoren eingesetzt werden kann. Zur Vermeidung von Materialanhäufungen ist der Bereich zwischen dem Rückschlussring 7 und der Lageraufnahme 26 im wesentlichen freigespart, es verbleiben nur eine scheibenförmige Nabe 31 und mehrere Speichen 28 - im vorliegenden Beispiel sind vier Speichen vorgesehen.

Fig. 1c zeigt einen Permanentmagnetrotor, der eine zweite zylindrische Lagerstelle 29a aufweist.

Fig. 1d zeigt einen Permanentmagnetrotor, der eine zweite konische Lagerstelle 29b aufweist. Zur besseren Entformbarkeit ist es sinnvoll, einen kleinen Hinterschnitt vorzusehen.

Dieser kann zum Beispiel durch die zweite Lagerstelle gebildet werden. Es sind auch andere Ausführungsformen eines Hinterschnittes 30 denkbar.

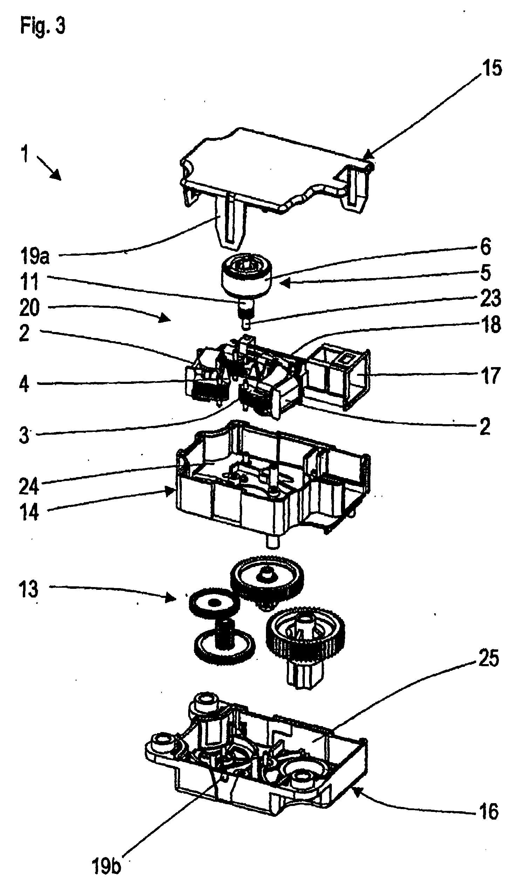

Fig. 2 zeigt eine dreidimensionale Darstellung des Permanentmagnetrings 6, der im mit dem Kunststofftragteil 8 anschließenden Bereich mit Aussparungen 12 versehen ist, die als Verdrehsicherung mit dem Kunststoffmaterial des Kunststofftragteils ausspritzbar sind. Auch der Rückschlussring kann mit Verdrehsicherungsausnehmungen versehen sein. Auf diese Weise sind die magnetisch wirkenden Teile und das Kunststofftragteil bleibend formschlüssig miteinander verbunden. Der Permanentmagnetring besitzt nach der Magnetisierung fünf Magnetpolpaare, wobei jeder Pol 36° des Umfanges einnimmt. Die Magnetisierung ist radial ausgerichtet, so dass an den Polübergängen die Magnetfeldlinien antiparallel verlaufen.

Fig. 3 zeigt eine Explosionsdarstellung eines Stellantriebs 1, mit einem Elektromotor 20, bestehend aus zwei bewickelten Statorteilen 2, mit Hauptolen 3 und Zusatzpolen 4, die an einer Zwischenplatte 14 befestigt sind, dem Permanentmagnetrotor 5, Kontaktstiften 18, einem Steckerschacht 17, wobei die Zwischenplatte 14 mit einem Motorgehäuseteil 15 eine Motorkammer 24 begrenzt, einem in einer Getriebekammer 25 angeordneten Untersetzungsgetriebe 13 und einer Achse 23 aus Stahl, zur Aufnahme des Permanentmagnetotors 5 mit der Rotorwelle 11, wobei die Getriebekammer 25 durch die Zwischenplatte 14 und einem Getriebegehäuseteil 16 begrenzt ist. Durch den axialen Versatz zwischen Ritzel 9 und Permanentmagnetring 6 und durch die als Motorträger dienende Zwischenplatte 14 ist eine Vormontage aller Motorteile ggf. auch von elektronischen Komponenten, wie Ansteuerung und Funkentstörung in einer vom Untersetzungsgetriebe getrennten Baugruppe möglich. Diese Baugruppe ist aus weiteren vormontierbaren Baugruppen zusammengesetzt, bestehend aus den Statorteilen 2 die mit je einem Isolierstoffkörper versehen und dann bewickelt werden, wobei die Wicklungen an den Kontaktstiften 18 angelötet werden. Dazu sind unterschiedlich lange Kontaktstifte vorgesehen, wobei die längeren Kontaktstifte beide Isolierstoffkörper miteinander mechanisch verbinden. Die Enden der Kontaktstifte bilden die Kontakte in einem Steckerschacht zur Verbindung mit einem Anschlussstecker. Vor der Montage in die Zwischenplatte 14 werden die Statorteile 2 mit Zusatzpolen 4 versehen, die aus gebogenen weichmagnetischen Einzelblechteilen bestehen. Die Hauptpole 3 dagegen bestehen aus paketierten weichmagnetischen Blechen. Die Verbindung zwischen den Blechteilen der Haupt- und Zusatzpole 3, 4 erfolgt über eingepresste Stifte, deren verlängerte Enden in Vertiefungen in der Zwischenplatte 14 und dem Motorgehäuseteil 15 gesteckt werden. Die Zusatzpole sind mit sechseckigen Ausnehmungen versehen, die auf vorstehenden, mit der Zwischenplatte einstückigen Stifte gepresst werden.

Jedem Hauptpol 3 und Zusatzpol 4 des einen Statorteils 2 steht jeweils ein Rotorpol gegenüber, während jedem Hauptpol 3 und Zusatzpol 4 des zweiten Statorteils 2 jeweils ein Polübergangsbereich gegenübersteht. Die Zusatzpole sind in altemierenden Richtungen angeschrägt um das Rastmoment zu verringem, an einer Stelle des Rotorumfanges verhindern die Schrägen auch eine Berührung bzw. Überlappung der Zusatzpole und damit magnetischen Kurzschluss. Der Winkelabstand der Hauptpole 3 jedes Statorteils 2 beträgt 108°.

Zur Herstellung des Permanentmagnetrotors 5 werden folgende Verfahrensschritte vorgeschlagen:

Die Baugruppe aus Permanentmagnetring 6 und gegebenenfalls Rückschlussring 7 werden in- bzw. aufeinander gesteckt und anschließend in eine zylindrische Aufnahme des Spritzwerkzeuges eingelegt, die durch zwei radial schließende Teilformen gebildet werden. Diese radial schließenden Teilformen sorgen für eine Vorzentrierung der Baugruppe. Beim Schließen der Form fahren die Teilformen radial zusammen und umfassen den Permanentmagnetring 6. Beim Einspritzen des Kunststoffs über die Einspritzkanäle wird ein großer Druck auf den Permanentmagnetring 6 ausgeübt und schließlich an die Form übertragen. Die Teilformen stützen dabei den Magneten ab. Durch die genaue Zentrierung und die daraus resultierende exakte Aufnahme in den Teilformen werden Magnetbrüche nahezu ausgeschlossen. Durch den Rückschlussring 7 kann der Einspritzdruck auf den Permanentmagnetring 6 teilweise abgefangen werden. Der Rückschlussring besteht üblicherweise aus einem dehnbaren weichmagnetischen Sintermaterial.

Die Magnetisierung erfolgt vorzugsweise unmittelbar vor der Montage der Permanentmagnetrotoren in den Antrieb, dadurch wird vermieden, dass auf die magnetisch aneinander haftenden Permanentmagnetrotoren besondere Rücksicht genommen werden muss und dass sich Metallspäne daran anhaften, die dann im Betrieb zu Störungen oder Ausfall des Elektromotors führen können.

Die an dem Rückschlussring durch das Werkzeug gebildeten Zentrierelemente sorgen dafür, dass sich der Rückschlussring 7 durch den hohen Einspritzdruck nicht verformt. Dadurch wird verhindert, dass sich ein Spalt zwischen Permanentmagnetring 6 und Rückschlussring 7 bildet, wodurch nach dem Einspritzen oder Magnetisieren der Permanentmagnetring 6 "gesprengt" werden kann.

### Bezugszeichenliste

- 1: Stellantrieb
- 2: Statorteile
- 3: Hauptpole
- 4: Zusatzpole
- 5: Permanentmagnetrotor
- 6: Permanentmagnetring
- 7: Rückschlussring
- 8: Kunststofftragteil
- 9: Ritzel
- 10: Gleitlager
- 11: Rotorwelle
- 12: Aussparungen
- 13: Untersetzungsgetriebe
- 14: Zwischenplatte
- 15: Motorgehäuseteil
- 16: Getriebegehäuseteil
- 17: Steckerschacht
- 18: Kontaktstifte
- 19a: Rastmittel
- 19b: Rastmittel
- 20: Elektromotor
- 21: Schmierstoffdepot
- 22: Anformung
- 23: Achse
- 24: Motorkammer
- 25: Getriebekammer
- 26: Aufnahme für Gleitlager
- 27: Fase
- 28: Absatz
- 29a: Zweite Lagerstelle zylindrisch
- 29b: Zweite Lagerstelle konisch
- 30: Hinterschnitt
- 31: Nabe

## Patentansprüche

1. Permanentmagnetrotor (5) für einen Elektromotor (20), bestehend aus einem Permanentmagnetring (6), der von einem Kunststofftragteil (8) gehalten ist und einem Gleitlager (10), **dadurch gekennzeichnet, dass** der Permanentmagnetring (6) aus einem gepressten kunststoffgebundenen Seltenerdmagneten besteht, das Gleitlager (10) mitlaufend ist und aus einem Sintermaterial besteht, das Kunststofftragteil (8) in einem Spritzwerkzeug herstellbar ist, eine zylindrische Aufnahme (26) für ein mitlaufendes Gleitlager aufweist und einstückig mit einem Ritzel (9) ist, das Kunststofftragteil (8) den Permanentmagnetring (6) zumindest teilweise axial und radial umfasst und der Permanentmagnetring (6) als Einlegeteil im Spritzwerkzeug mit einspritzbar ist.

2. Permanentmagnetrotor nach Anspruch 1, **dadurch gekennzeichnet, dass** der Permanentmagnetring (6) beidseitig axial vom Kunststofftragteil (8) gehalten ist.

3. Permanentmagnetrotor nach Anspruch 1, oder 2, **dadurch gekennzeichnet, dass** das Ritzel (9) Bestandteil einer als Hohlwelle ausgebildeten Rotorwelle (11) ist.

4. Permanentmagnetrotor nach Anspruch 1, 2 oder 3, **dadurch gekennzeichnet, dass** am Innenumfang des Permanentmagnetrings (6) ein Rückschlussring (7) angebracht ist.

5. Permanentmagnetrotor nach nach Anspruch 4, **dadurch gekennzeichnet, dass** der Rückschlussring (7) aus einem weichmagnetischem Sintermaterial besteht.

6. Permanentmagnetrotor nach nach Anspruch 4 oder 5, **dadurch gekennzeichnet, dass** der Rückschlussring (7) axial kürzer ist als der Permanentmagnetring (6).

7. Permanentmagnetrotor nach Anspruch 4, 5 oder 6, **dadurch gekennzeichnet, dass** der Rückschlussring (7) mindestens eine umlaufende Fase (27) aufweist, die dem Permanentmagnetring (6) zugewandt ist.

8. Permanentmagnetrotor nach Anspruch 4, 5, 6 oder 7, **dadurch gekennzeichnet, dass** der Rückschlussring (7) Aussparungen (12) aufweist, die eine relative Verdrehung zum Kunststofftragteil (8) verhindern.

9. Permanentmagnetrotor nach zumindest einem der vorangehenden Ansprüche, **dadurch gekennzeichnet, dass** der Permanentmagnetring (6) Aussparungen (12) aufweist, die eine relative Verdrehung zum Kunststofftragteil (8) verhindern.

10. Permanentmagnetrotor nach Anspruch 8 oder 9, **dadurch gekennzeichnet, dass** die Aussparungen (12) stirnseitig angeordnet sind.

11. Permanentmagnetrotor nach Anspruch 8, 9 oder 10, **dadurch gekennzeichnet, dass** die Aussparungen (12) verrundet oder trapezförmig sind.

12. Permanentmagnetrotor nach zumindest einem der vorangehenden Ansprüche, **dadurch gekennzeichnet, dass** das Gleitlager (10) im Innenbereich aufgeweitet ist.

13. Permanentmagnetrotor nach zumindest einem der vorangehenden Ansprüche, **dadurch gekennzeichnet, dass** das Gleitlager (10) am Innendurchmesser einen Absatz aufweist.

14. Permanentmagnetrotor nach zumindest einem der vorangehenden Ansprüche, **dadurch gekennzeichnet, dass** zusätzlich zum mitlaufenden Gleitlager (10) eine zweite Lagerstelle (29a, 29b) gebildet wird, die einstückig mit dem Kunststofftragteil ist.

15. Permanentmagnetrotor nach Anspruch 14, **dadurch gekennzeichnet, dass** die zweite Lagerstelle (29a) zylindrisch ausgeformt ist.

16. Permanentmagnetrotor nach Anspruch 14, **dadurch gekennzeichnet, dass** die zweite Lagerstelle (29b) konisch ausgeformt ist.

17. Permanentmagnetrotor nach zumindest einem der vorangehenden Ansprüche, **dadurch gekennzeichnet, dass** das Gleitlager (10) durch ein Schmierstoffdepot (21) mit zusätzlichem Schmierstoff versorgt wird.

18. Permanentmagnet nach zumindest einem der vorangehenden Ansprüche, **dadurch gekennzeichnet, dass** im Bereich der Stimseite des Permanentmagnetrings (6) mindestens 4 Auswerfer am Umfang verteilt angeordnet sind.

19. Permanentmagnet nach zumindest einem der vorangehenden Ansprüche, **dadurch gekennzeichnet, dass** das Kunststofftragteil (8) mindestens vier, vorzugsweise neun gleichmässig über den Umfang verteilte und radial angeordnete Speichen (28) aufweist.

20. Permanentmagnet nach zumindest einem der vorangehenden Ansprüche, **dadurch gekennzeichnet, dass** das Kunststofftragteil (8) einen Hinterschnitt (30) aufweist zur Entformung der zylindrischen Aufnahme für das mitlaufende Gleitlager (10).

21. Verfahren zur Herstellung eines Permanentmagnetrotors nach zumindest einem der vorangehenden Ansprüche, **dadurch gekennzeichnet, dass** vor einem Spritzvorgang der Permanentmagnetring (6) über den Rückschlussring (7) geschoben wird.

22. Verfahren zur Herstellung eines Permanentmagnetrotors nach zumindest einem der vorangehenden Ansprüche, **dadurch gekennzeichnet, dass** der Permanentmagnetring (6) und der Rückschlussring (7) gemeinsam ins Spritzwerkzeug eingelegt werden.

23. Verfahren zur Herstellung eines Permanentmagnetrotors nach zumindest einem der vorangehenden Ansprüche, **dadurch gekennzeichnet, dass** der Permanentmagnetring (6) während eines Spritzvorgangs direkt an Formteilen des Spritzwerkzeugs anliegt.

24. Verfahren nach zumindest einem der vorangehenden Ansprüche, **dadurch gekennzeichnet, dass** der Permanentmagnetring (6) und/oder der koaxial zu diesem angeordnete weichmagnetische Rückschlussring (7) durch Abstandhalter am Spritzwerkzeug axial gehalten wird/werden und zwischen den Abstandhaltem in einem um den Permanentmagnetring (6) und/oder dem koaxial zu diesem angeordneten weichmagnetischen Rückschlussring (7) angrenzenden Bereich Kunststoffmaterial des Kunststofftragteils (8) eingespritzt wird.

25. Verfahren zur Herstellung eines Permanentmagnetrotors (5) für einen Elektromotor (20) oder Drehmagneten mit einem Kunststofftragteil (8), **dadurch gekennzeichnet, dass** ein Permanentmagnetring (6) und/oder ein koaxial zu diesem angeordneter weichmagnetischer Rückschlussring (7) an seiner Innenwandung von Zentrierelementen eines Spritzwerkzeugs zumindest radial gehalten wird und das Kunststoffmaterial (8) des Kunststofftragteils (8) derart eingespritzt wird, dass zwischen dem Kunststofftragteil (8) und dem Permanentmagnetring (6) und/oder dem weichmagnetischen Rückschlussring (7) eine formschlüssige Verbindung besteht.

26. Verfahren nach Anspruch 25, **dadurch gekennzeichnet, dass** die Zentrierelemente Zylinderstifte oder Ringsegmente sind.

27. Verfahren nach zumindest einem der vorangehenden Ansprüche, **dadurch gekennzeichnet, dass** das Gleitlager (10) mit eingespritzt wird.

28. Stellantrieb mit einem Permanentmagnetrotor nach Anspruch 17, **dadurch gekennzeichnet, dass** das Schmierstoffdepot (21) in einem Gehäuseteil (15) angeordnet ist, in dem der Permanentmagnetrotor (5) gelagert ist.

29. Stellantrieb nach Anspruch 17 oder 28, **dadurch gekennzeichnet, dass** das Schmierstoffdepot (21) als eine koaxial zur Drehachse des Permanentmagnetrotors (5) angeordnete ringförmige mit Schmierstoff gefüllte Nut ausgebildet ist.

30. Stellantrieb nach Anspruch 17, 28 oder 29, **dadurch gekennzeichnet, dass** der Permanentmagnetrotor (5) eine in das Schmierstoffdepot (21) ragende Anformung (22) aufweist.

31. Stellantrieb nach Anspruch 30, **dadurch gekennzeichnet, dass** die Anformung (22) einstückig mit dem Kunststofftragteil (8) ist und einen ringförmigen Querschnitt aufweist.

32. Stellantrieb mit einem Permanentmagnetrotor nach einem der vorangehenden Ansprüche, **dadurch gekennzeichnet, dass** der Permanentmagnetrotor (5) auf einer zwischen einem ersten und einem zweiten Gehäuseteil (15, 16) gehaltenen Achse (23) drehbeweglich gelagert ist.

33. Stellantrieb nach Anspruch 32, **dadurch gekennzeichnet, dass** die Achse (23) als feststehende Metallachse ausgebildet ist, um die sich die mitlaufenden Lager (10) und (29a, 29b) drehen.

34. Stellantrieb nach Anspruch 32 oder 33, **dadurch gekennzeichnet, dass** die Achse (23) aus gehärtetem Stahl ist.

35. Stellantrieb nach Anspruch 34, **dadurch gekennzeichnet, dass** die Achse (23) oberflächengehärtet ist mit einem weichen Stahlkern.

36. Stellantrieb nach Anspruch 32, 33, 34 oder 35 **dadurch gekennzeichnet, dass** die Achse (23) an der Oberfläche vernickelt ist.

37. Stellantrieb nach zumindest einem der vorangehenden Ansprüche, **dadurch gekennzeichnet, dass** Statorteile (2) eines Elektromotors (20) auf einer Zwischenplatte (14) befestigt sind, die eine Motorkammer (24) von einer Getriebekammer (25) trennt, wobei der Permanentmagnetring (6) in der Motorkammer (24) angeordnet ist und das Ritzel (9) über die Rotorwelle (11) in die Getriebekammer (25) vorsteht und dort mit einem Untersetzungsgetriebe (13) in Eingriff ist.

38. Stellantrieb nach Anspruch 37, **dadurch gekennzeichnet, dass** das Schmierstoffdepot (21) in der Motorkammer (24) angeordnet ist.
